# EUROPEAN PATENT APPLICATION

(11) **EP 1 164 055 A2**
(43) Date of publication of application: **19.12.2001**
(21) Application number: 01305105.7
(22) Date of filing: 12.06.2001
(51) Int. Cl.: B60R 11/02

(54) **Mounting system for portable telephone**

(30) Priority: 12.06.2000 US 592098
(71) Applicant: NOKIA MOBILE PHONES LTD., 02150 Espoo (FI)
(72) Inventor: Kam, Richard, Yuen Long, N.T. Hong Kong (HK)
(74) Representative: Read, Matthew Charles

(57) **Abstract**

A holder having a locking mechanism for a telephone. The holder includes a single piece integral structure forming a combined pushing/locking element that is adapted to act as both a pushing element pushing against a rear portion of the telephone and also as a simultaneous locking element for locking the telephone to the holder whereby as the rear portion of the telephone pushes against the pushing element portion of the single piece pushing/locking element, the locking element portion of the single piece pushing/locking element substantially simultaneously is pushed inwards towards the phone thereby locking the phone in the holder.

## Description

### BACKGROUND OF THE INVENTION

### 1. Field of the Invention

The invention is generally related to electronic devices such as mobile phones, and particularly to a bracket for removably holding the phone, the bracket including a fixing means for securely holding the device in the bracket. The invention can be used, for example, in fixing a mobile phone to an inside surface of a automobile. More specifically, this invention relates to a passive telephone holder with a single piece pushing/locking mechanism adapted to interact with the back surface of the telephone battery cover to secure a telephone firmly in place in the holder.

### 2. Description of the Prior Art

The total number of cordless phones, personal handy phone systems and mobile telephones in general use worldwide is rapidly increasing. Since a large percentage of these telephones are used within automobiles or other moving vehicles while the user is driving, many of these devices have been provided with means to attach these devices to an appropriate position in a vehicle compartment in order to hold the mobile telephone securely while the vehicle is moving thereby permitting a driver or passenger to easily and safely use the phone. One particular safety aspect of the use of these phones in moving vehicles concerns the question of how to easily place and carry the mobile phone securely in a holder within the vehicle, while at the same time allowing the user easy access to remove the phone from the holder and use it.

From the user's point of view it is desirable that a mobile phone be securely held in the mobile phone holder during driving, and also be conveniently, easily, and quickly detachable from the holder with one hand, permitting the user to operate the vehicle with the other. The mobile telephone should also be easily and quickly and securely replaceable back into the holder with one hand, when the user is finished using the mobile telephone. Additionally, from the design point of view, it would be an added advantage if the telephone also uses a battery that does not require special exterior flat surfaces. From the manufacturer's point of view, it is further desirable that the phone holder be capable of providing all these advantages and at the same time be light weight and simple in construction, generally allow the industrial designer more freedom for styling the telephone, and also permit the phone designers to design telephones having additional inside space.

Presently existing mobile telephone holders may offer one or more of the above listed advantages, but they simply do not provide all of the above advantages together in a mobile telephone holder. It would definitely lead to a unique situation if all the above described advantages could be obtained in the same product.

EP0545670B1 illustrates a design for a telephone holder including a cradle portion formed to receive a telephone; a mounting portion; the cradle portion being movably mounted on the mounting portion; and retaining means that exerts a retaining force on a telephone. The disclosed design for a telephone holder does not include release buttons nor a mechanism for pushing away the telephone. It appears that releasing the telephone from its holder takes place by simply pulling the telephone. In the present invention in order to release a locked telephone, a user has to push a release button associated with the car holder.

U.S. Patent No. 5,825,874 illustrates a mobile telephone holder having a frame and a combined latching and ejecting mechanism. Due to the simplicity of the mechanism disclosed, there is no linkage between the two illustrated release buttons on the telephone holder. As a result, users have to press both buttons simultaneously, to release both side locks of the phone, thereby completely unlocking the phone from the holder. Another example of a known telephone car holder is given in U.S. Patent No. 5,907,796.

Another known telephone holder usable in a car is disclosed in U.S. Patent Application 09/189,614, filed November 9, 1998 and assigned to Nokia. The application describes a telephone holder, especially a holder installable on a car in which a phone is kept during driving. The holder has an enclosed structure and it comprises a cup-like inner shell part, an outer shell part and a locking element fitted in the cavity between the shell parts and movable with respect to the shell parts, a thrust block and locking claw in the locking element being located in a hole formed in the inner shell part. The phone is locked into the holder with a turning movement wherein the phone pushes the thrust block and at the same time a guiding surface in the outer shell part wedges the locking claw into a hollow on the side of the phone. The pushing movement is directed against the end of a double torsion spring in the holder so that the middle part of the spring turns a shaft and thus locks the locking element into the locked position. The phone is released from the locked position by pressing the shaft by means of a push lever wherein the locking element is freed from a catch and the end of the process returns the phone to the initial position so that it can be removed from the holder.

Unlike the telephone holders described by the prior art, the present invention is for a very unique structure for a telephone which simply makes use of the back surface of the phone battery instead of special side features for interaction between the phone and the car holder mechanism. With the features of the present invention, there is no need to make any special exterior flat surface at the two sides of the battery. The car holder simply interacts with the back surface of the phone battery for activating the holder mechanism. There is no known telephone holder that interacts with the rear surface of the phone battery for activating the phone holder mechanism in order to lock the phone, while the phone is turning about a pivot point in the holder.

Without the need to reserve special exterior flat surface at the two sides of the phone battery, industrial designers have larger degrees of freedom in product design, while mechanical designers can get more useable space inside the phone. The assembly of the car phone holder mechanism is also simplified and overall assembly time is reduced, thereby reducing the overall manufacturing costs associated with a phone holder.

### SUMMARY OF THE INVENTION

The present invention relates to a holder with a locking mechanism for a telephone, the holder further including a single piece pushing/locking element that is adapted to act as both (i) a pushing element pushing against a rear portion of the telephone, and (ii) a locking element for locking the telephone to the holder, whereby as the rear portion of the telephone pushes against the pushing element portion of the single piece pushing/locking element the locking element portion of the single piece pushing/locking element substantially simultaneously is pushed inwards towards the phone thereby locking the phone in the holder with locking hooks located at the end portions thereof.

The present invention also features a locking mechanism which includes a locking element (i.e. one portion of the pushing/locking element) which, due to it being part of a single piece mechanism, i.e. the "single piece" feature, it can in addition to its locking feature, push away the phone from the holder and/or be activated by the phone by pushing against the backside of the phone battery. Since the locking element is part of a single piece part which includes a pushing feature as described below, it also helps reduce the assembly lead-time for the holder structure, thereby reducing overall manufacturing costs.

Furthermore, in accordance with the features of the present invention, in order to activate the single piece pushing/locking element, a push button mechanism and slider system is featured whereas when at least one of the push-buttons is pushed inwardly, the slider system is consequently brought to a position that it releases the locking element of the single piece pushing/locking element thereby unlocking the phone from the phone holder while at the same time all push buttons automatically move in an inward direction.

### BRIEF DESCRIPTION OF THE DRAWINGS

The invention will now be described in more detail by means of an example and accompanying drawings which are incorporated in and constitute a part of the specification, and which illustrate one embodiment of the invention and also, together with the description, serve to explain the principles of the present invention, wherein:
Fig. 1 illustrates a perspective view of a car telephone holder in accordance with the features of the present invention, the holder being in an "unlocked" position vis-à-vis the phone,
Fig. 2 illustrates a perspective view of a car telephone holder in accordance with the features of the present invention, the holder being in a "locked" position vis-à-vis the phone,
Fig. 3 illustrates a cross sectional view of a car telephone holder with a phone in place in accordance with the features of the present invention, the phone being in an "unlocked" position,
Fig. 3A illustrates another cross sectional view of a car telephone holder in accordance with the features of the present invention the phone being in an "unlocked" position.
Fig. 4 illustrates a cross sectional view of a car telephone holder with a phone in place in accordance with the features of the present invention, the phone being in the "locked" position,
Fig. 4A illustrates another cross sectional view of the car telephone holder in accordance with the features of the present invention in a "locked" position.
Fig. 5 illustrates a perspective view of a single piece pushing/locking element in accordance with the features of the present invention,
Fig. 6 illustrates a perspective view of the inside mechanism of a car telephone holder with a phone in place in accordance with the features of the present invention, specifically illustrating push buttons, a slider mechanism and a single piece pushing/locking element.
Fig. 7 illustrates a perspective view of the push-button and slider mechanism used in the car telephone holder in accordance with the features of the present invention;
Fig. 8 illustrates a perspective view of a slider mechanism and a single piece pushing/locking element as used in a car telephone holder in accordance with the features of the present invention, the slider being in a position to place the phone in an "locked" position;
Fig. 8A is a perspective view illustrating the single piece pusher/locking element used in a car telephone holder in such a position that blocks the return of the slider mechanism in accordance with the features of the present invention and places the phone in an "unlocked" position; and
Fig. 8B is a perspective view illustrating the single piece pusher/locking element used in a car telephone holder in such a position that it does not block the slider mechanism from returning to the "home" position in accordance with the features of the present invention.

### DETAILED DESCRIPTION OF THE PREFERRED EMBODIMENT

The features of the present invention are best explained with regard to a mobile telephone or phone, and a phone holder which is designed to be installed in a car in such a manner so that the phone can be easily and safely reached and used by the driver of the car while driving the car. In accordance with the features of the present invention, the phone can be inserted in the holder and locked into it with a simple move of one hand. The removal of the phone from the holder is accomplished by the simple pressing of a push-button located on the holder also by the use of one hand.

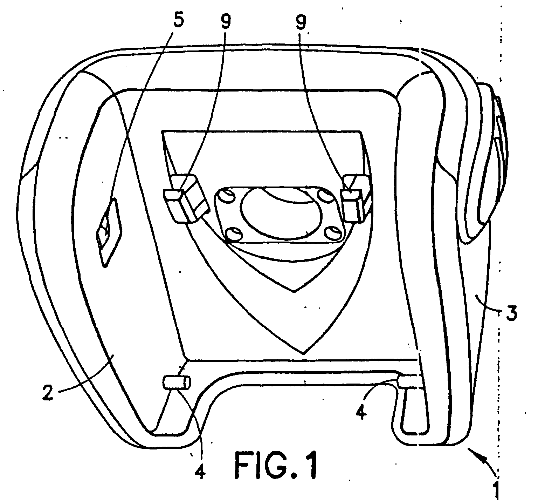

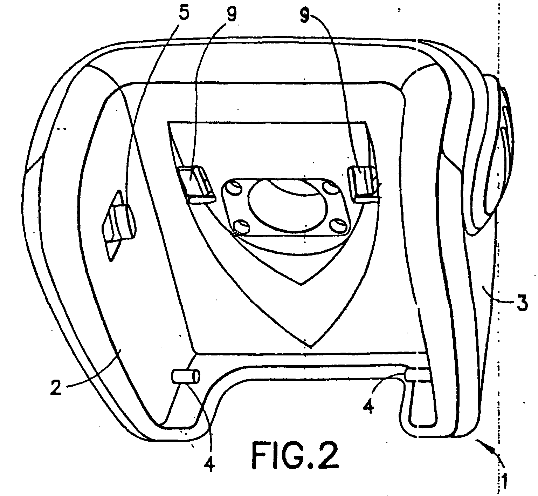

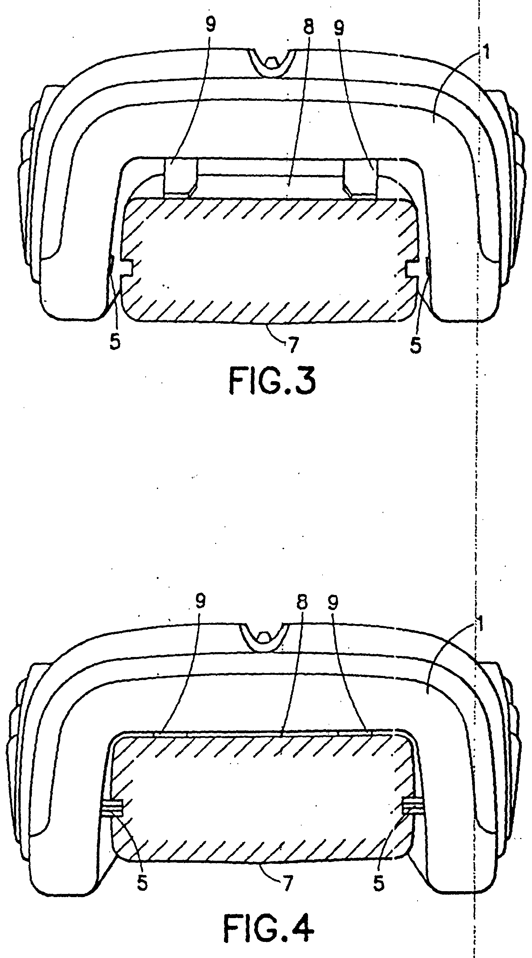

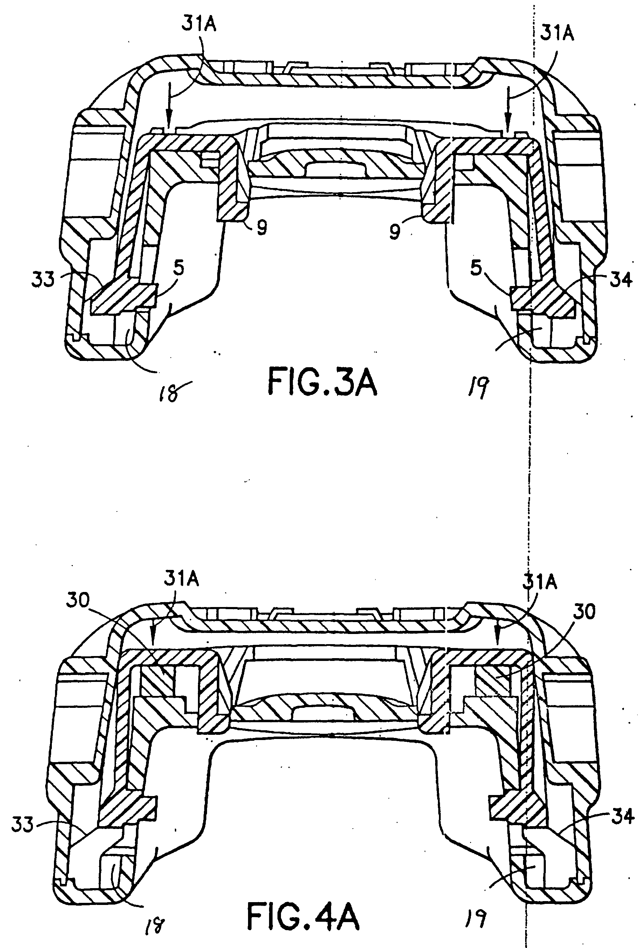

The holder 1 which can best be seen in Figs. 1 and 2, comprises mainly a stationary piece that includes a cup-like inner shell part 2 and against that an outer shell part 3, which defines between them a cavity in the holder. In use in accordance with that shown in Fig. 1, a phone (not shown) is inserted into the holder 1 by first fitting a notch (not shown) located on the bottom part of the phone onto the pivots 4 located on the opposing sides of holder 1. At this juncture, locking hooks 5 or that which can also be referred to as locking latches which are part of and located at the end portions of a locking element positioned on each end portion of the single piece pushing/locking element are in an unlocked position with regard to a phone located within holder 1. As more clearly shown in Fig. 3, when a phone 7 is first positioned in holder 1, the back surface 8 of the phone battery presses against each spring type pusher element 9. As pressure is applied on the phone in such a manner that pushes each spring type pushing element 9 inwardly, phone battery back surface 8 eventually lies in substantially contiguous relationship with the inner surface of holder 1 as shown more clearly in Fig. 4. In this position the locking hooks 5 lock the phone to the holder and thereby places the phone in a locked position as illustrated in Fig. 4.

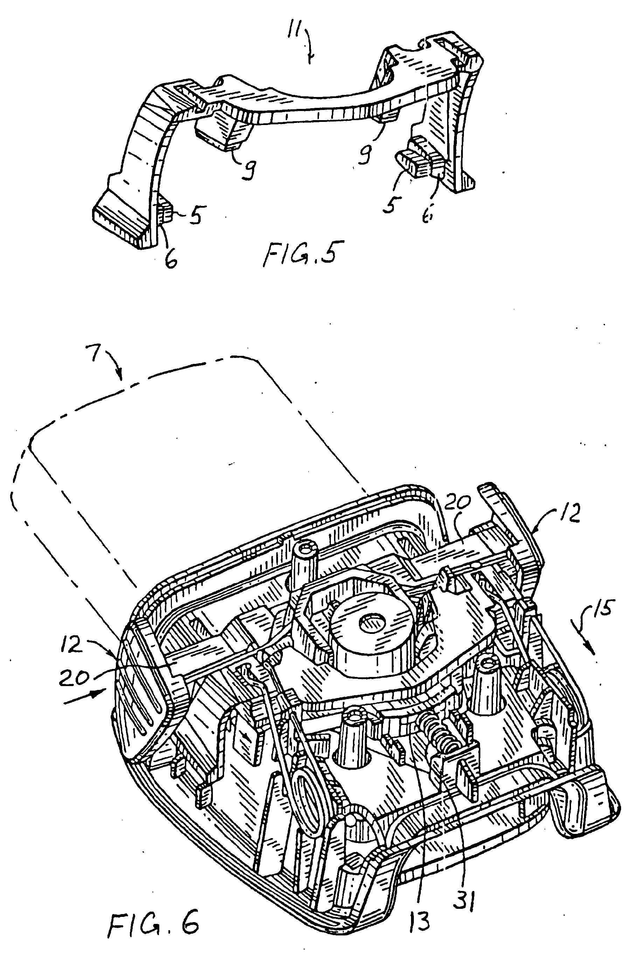

The single piece pushing/locking element employed in holder 1, as described in this invention and as specifically shown in Fig. 5 is constructed such that each pushing element 9 is spaced a relatively considerable distance from each locking element 6. In fact, it is a preferred construction in accordance with the features of the present invention that each pushing element 9 is positioned at a middle portion of the single piece pushing/locking element 11 and each of the locking elements 6 is positioned at each end portion of the pushing/locking element. To avoid issues that can be raised due to this construction feature, the present invention includes employing a pusher/locking element which is formed of a single integral piece of material. As more clearly shown in Fig. 5, the single piece pusher/locking element 11 acts as a pusher against the backside of a phone via pushing elements 9, and on the other hand and at the same time (i.e. simultaneously) also acts as an activator for triggering the engagement of the locking hooks with the phone, the hooks being positioned on the end portions of each locking element.

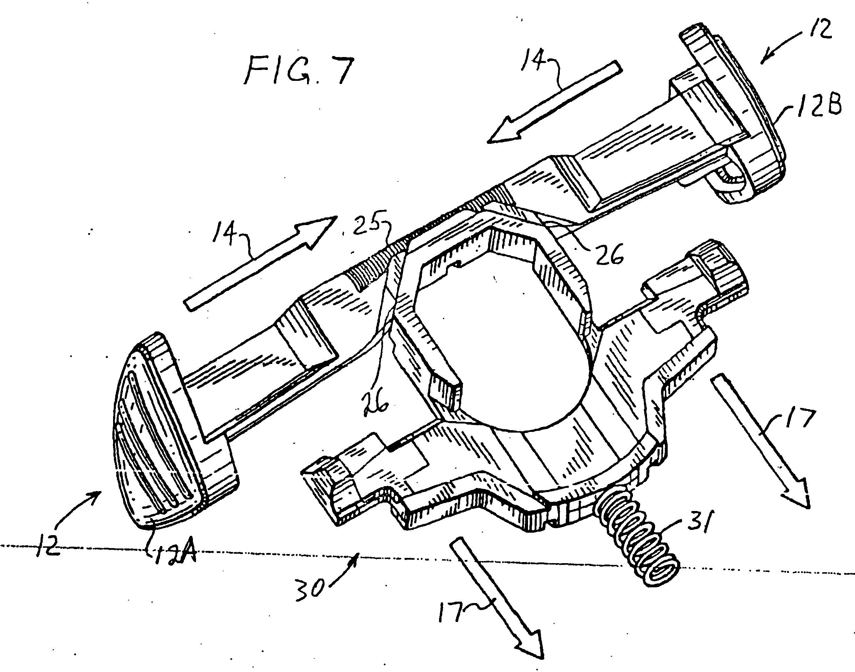

As illustrated in Figs. 6, 7 and 8, the movement of the push buttons 12 are governed by ribs (not shown) that guide movement of the buttons such that the movement of push buttons 12 is limited to an inward and outward movement along the direction 14 as specifically shown in Fig. 7. The spring 25 positioned between the push buttons 12 is a tensile spring that provides a relatively weak tensile spring force that pulls the two buttons 12 together inwardly.

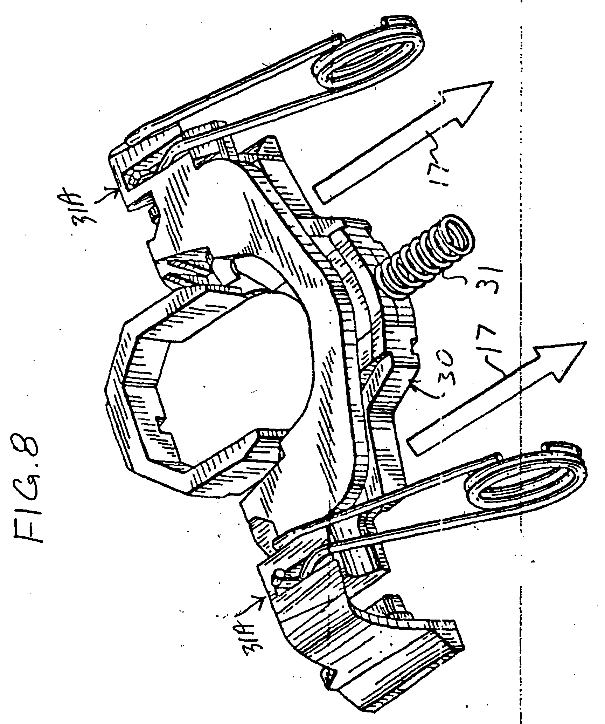

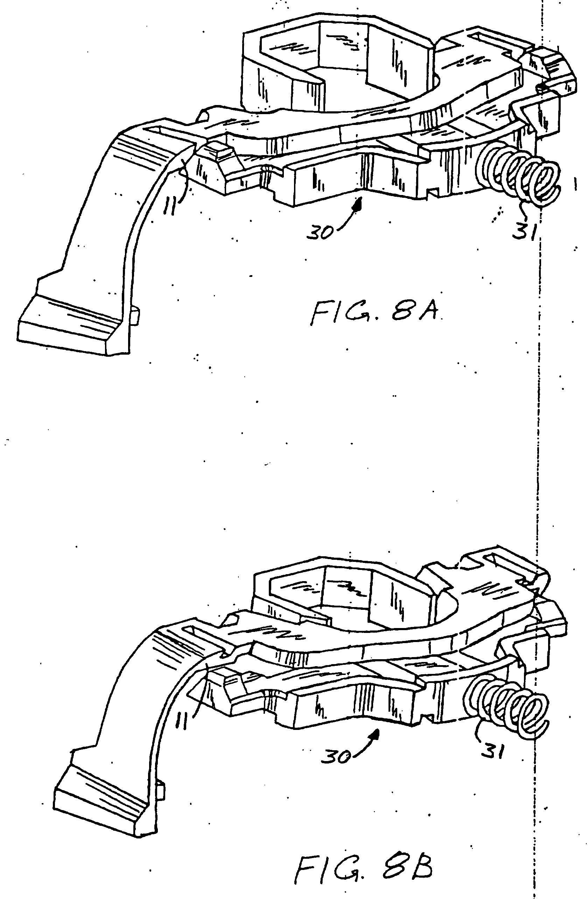

The movement of the slider mechanism 30 as illustrated in Figs. 6, 7 and 8 is governed by a plurality of guiding ribs (not shown) such that movement of the slider mechanism is limited to a back and forth movement along the direction 17 as illustrated in Figs. 7 and 8. Positioned at the rear end portion of the slider mechanism is a compression spring 31 that provides a relatively strong spring force pushing the slider mechanism in a forward direction. As more clearly illustrated in Fig. 7 that explains why only one push button 12 is required to be pushed to activate slider mechanism 30. As clearly illustrated in Fig. 7, when a push button 12 is pushed in an inward direction (i.e. the direction of arrows 14), the slider mechanism moves in a backward direction 17, the movement being governed by the slider mechanisms guiding ribs (not shown) pushing against the compression spring force of spring 31. At the same time that one of the push buttons 12A is pushed in an inward direction, the other push button 12B moves in an inward direction. This is automatically driven by the force of tensile spring 25. The movement of the buttons 12 is governed by its guiding ribs (not shown).

In Fig. 8A, there is illustrated the slider mechanism 30 that has moved a sufficient amount in a backward direction so that it releases the single piece pushing/locking element 11. Governed by some guiding ribs (not shown), the single piece pushing/locking element 11 can move up and down only. Movement of the slider mechanism 30 results in the release of the single piece pushing/locking element 11 such that the locking hooks positioned on each end portion of the locking elements of the single piece pushing/locking element can start moving downwards, governed by the guiding ribs and driven by the spring force 31 A on the shoulder portions of the single piece pushing/locking element, as shown in Fig. 3A and Fig. 8.

Once the locking elements with locking hooks has reached its most downward possible position, (see Figs. 3 and 3A) then the following features occur:
(i) as shown in Fig. 3A the two hooks 5 are in an open position due to existence of two lower ribs 18 and 19with angled top surfaces.
(ii) When the hooks 5 are in an open position this causes the release of the phone as shown in Fig. 3.
(iii) In this position of the slider mechanism 30, the single piece pushing/locking element blocks the way so that the slider mechanism 30 cannot return to its forward initial position, even though there exits a relatively strong compressive spring force behind it due to spring member 31 as shown in Fig. 8A.

At this juncture the sliding mechanism is in the stable unlocked portion. The mechanism for now locking the telephone in the holder is as follows:
As previously described, to lock the phone in the holder, the phone is placed in the holder such that the phone battery surface exerts a pushing force on the spring type pushing element portion of the single piece pushing/locking element. Once the locking hooks 5 have been pushed to their uppermost portion by inserting the phone into the holder and pushing against the spring type pusher elements 9 as illustrated in Figs. 4 and 4A then:
   (i) as illustrated in Fig. 4A, the two hook elements 5 are directed to a closed position to lock the phone in the holder by the slider mechanism 30 causing the movement of upper ribs 33 and 34 which are pushing against surfaces 41 and 42 of the single piece pushing/locking element as illustrated in Fig. 5.
   (ii) As illustrated in Fig. 4 the phone 7 is now locked in the holder.
   (iii) The single piece pushing/locking element 11 no longer blocks the path of the slider mechanism 30 (see Fig. 8B).
   (iv) The slider mechanism 30 then moves in a forward direction governed by its guiding ribs and driven by the relatively strong compressive spring force behind it.
   (v) the push buttons 12 move outward as the slider mechanism moves in a forward direction (i.e., they move in opposite moving directions to the arrows 14 as illustrated in Fig. 7). The tensile spring force due to spring 25 in between the push buttons 12 is substantially weaker than the compressive spring force due to spring 31 that forces the slider mechanism in a forward direction. Basically, the button tensile spring 25 is primarily able to provide a linkage between the two buttons 12.
   (vi) Eventually, the slider mechanism returns to the initial position (home position) as illustrated in Fig. 8 and Fig. 4A.
   (vii) At this juncture, the slider mechanism blocks the path that the single piece pushing/locking element 11 can move in a generally downward direction even though there exists downwardly pushing spring forces 31A on the shoulder portions of the single piece pushing/locking element 11 (note Figs. 8 and 4A).
   (viii) The locking elements along with their locking hooks can now only remain in its uppermost position. It is locked along with the telephone. At this juncture the entire mechanism is in a stable locked position.
   (ix) The next step would be to unlock the phone, and to start the process over again (as described above). To do this one would simply push at least one push button 12 in an inward direction with ones finger.

It should be understood that the foregoing description is only illustrative of the invention. Various alternatives and modifications can be devised by those skilled in the art without departing from the invention. Accordingly, the present invention is intended to embrace all such alternatives, modifications and variances which fall within the scope of the appended claims.

## Claims

1. A telephone holder said holder including a single piece integral structure forming a combined pushing/locking element, said pushing/locking element being adapted to act as both a pushing element pushing against a rear portion of said telephone and as a locking element for locking said telephone to said holder whereby as said rear portion of said telephone pushes against said pushing element portion of said single piece pushing/locking element, said locking element portion of said single piece pushing/locking element substantially simultaneously is pushed inwards towards said phone thereby locking said phone in said holder.

2. A telephone holder according to claim 1 wherein said pushing element is positioned at a middle portion of said single piece pushing/locking element and said locking element is positioned at each end portion of said pushing/locking element.

3. A telephone holder according to claim 1 wherein said pushing element pushes against a battery positioned within said phone.

4. A telephone holder according to claim 1 wherein each locking element includes a locking hook integrated therewith.

5. A telephone holder according to Claim 4 wherein each locking hook is positioned at the end portion of each locking element, said locking hook being adapted to lock said telephone in said holder.

6. A telephone holder according to Claim 5 wherein each of said locking hooks are in their uppermost position to lock said telephone to said holder.

7. A telephone holder according to claim 1 further comprising a system for activating said single piece pushing/locking element comprising at least one button and a slider mechanism said system adapted to release said locking element when at least one button is pressed.

8. A telephone holder according to claim 7 wherein only one button needs to be pushed to release a locked phone.

9. A telephone holder according to Claim 7 wherein said single piece pushing/locking element is adapted to prevent movement of said slider mechanism.

10. A telephone holder according to Claim 7 wherein said slider mechanism is driven by a spring type force.

11. A telephone holder according to Claim 7 wherein said telephone is locked in position within said holder and said single piece pushing/locking element does not block the path of said slider mechanism.

12. A telephone holder according to Claim 7 wherein said push buttons are positioned by a tensile spring force weaker than the compressive spring force which positions said slider mechanism.

13. A telephone holder according to Claim 7 wherein said slider mechanism is positioned to block the path of movement of said single piece pushing/locking element.

14. A single piece pushing/locking element for use in a telephone holding device, said single piece element adapted to act as both a mechanism to push said telephone out of said holder and a mechanism to lock said telephone in said holder, comprising a single piece structure including flexible locking elements positioned at each end portion of said single piece element and flexible pushing members positioned at the middle portion of said single piece element.

15. A holder for a mobile telecommunications device including a locking element and an actuator slidably mounted in the holder and protruding therefrom such that the actuator is depressed by a device in response to its insertion into the holder to cause the locking element to protrude from the holder and engage the device to lock it therein.
